# FASCICULE DE BREVET EUROPEEN

(11) **EP 4 142 114 B1**
(45) Date de publication et mention de la délivrance du brevet: **17.12.2025**
(21) Numéro de dépôt: 22191641.4
(22) Date de dépôt: 23.08.2022
(51) Int. Cl.: H02K 1/32, H02K 9/06

(54) **MOTEUR ÉLECTRIQUE REFROIDI PAR AIR**
LUFTGEKÜHLTER ELEKTROMOTOR
AIR-COOLED ELECTRIC MOTOR

(30) Priorité: 25.08.2021 FR 2108904
(43) Date de publication de la demande: 01.03.2023
(73) Titulaire: ALSTOM Holdings, 93400 Saint-Ouen-sur-Seine (FR)
(72) Inventeur: ROBBE, Gilles, 25660 MONTFAUCON (FR)
(74) Mandataire: Plasseraud IP

(56) Documents cités:
- CN-A- 108 964 314
- DE-A1- 10 052 426
- FR-A1- 3 062 253
- JP-A- 2005 312 097

## Description

La présente invention concerne un moteur électrique, selon le préambule de la revendication 1.

Les moteurs électriques de forte puissance, et notamment les moteurs de traction pour véhicules ferroviaires comportent des moyens de refroidissement des circuits magnétiques. En particulier, il est connu de ménager, dans le rotor, des conduits longitudinaux s'étendant parallèlement à l'axe de rotation d'une extrémité à l'autre du rotor. Les conduits traversent de part en part l'empilement des tôles magnétiques.

Un ventilateur assure une circulation d'un flux d'air au travers des conduits assurant ainsi lors de son fonctionnement le refroidissement du moteur.

Les conduits ménagés dans le rotor tournent avec le rotor à une vitesse élevée alors que l'air de refroidissement arrive avec une vitesse parallèle à l'axe du rotor. L'écoulement subit donc à l'entrée des conduits un cisaillement et pénètre difficilement dans les conduits, conduisant à des pertes de charge, à une mauvaise circulation du flux de refroidissement et à des bruits aérauliques désagréables de fonctionnement du moteur.

Pour résoudre ce problème, il a été envisagé par le document US 2002/0009362 de ménager, à l'extrémité amont de chaque conduit, un profil convergeant pour éviter des bords de transition saillant entre la face avant du rotor et la surface interne des conduits.

FR 3.062.253 décrit un moteur électrique selon le préambule de la revendication 1. JP 2005 312097, CN 108 964 314 et DE 100 52 426 décrivent d'autres moteurs électriques de l'état de la technique.

Cette solution n'est que partiellement satisfaisante et des bruits subsistent lors de l'introduction du flux d'air dans les conduits.

L'invention a pour but d'apporter une solution à ce problème de bruit en permettant une meilleure circulation de l'air lors de son entrée dans les conduits.

À cet effet, l'invention a pour objet un moteur électrique selon la revendication 1.

Suivant des modes particuliers de réalisation, le moteur comporte l'une ou plusieurs des caractéristiques des revendications dépendantes, prises seules ou en combinaison suivant tous les agencements techniquement possibles.

L'invention sera mieux comprise à la lecture de la description qui va suivre, donnée uniquement à titre d'exemple et faite en se référant aux dessins sur lesquels :
- [Fig.1] La figure 1 est une demi-coupe longitudinale d'un moteur électrique de traction ferroviaire selon l'invention ; et
- [Fig.2] La figure 2 est une vue à plus grande échelle d'une extrémité du rotor de la figure 1.

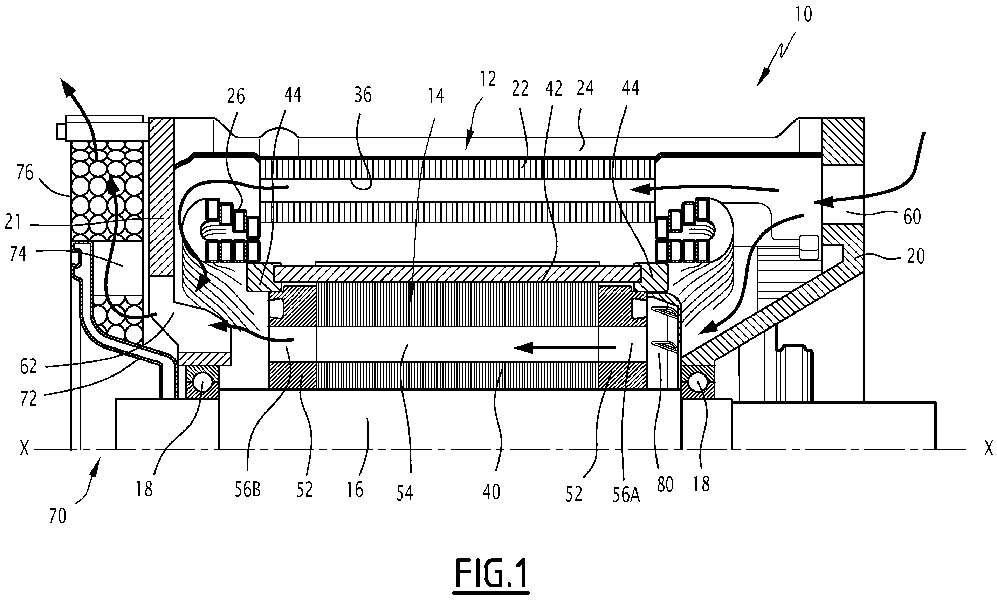

Le moteur 10 illustré sur la figure 1 est par exemple un moteur de traction d'un véhicule ferroviaire.

Il comporte comme connu en soi une carcasse 12 formant un stator dans laquelle un rotor 14 est monté mobile en rotation autour d'un axe commun X-X.

Le rotor 14 comporte un arbre rotatif 16 porté par des paliers 18 disposés aux deux extrémités. Les paliers sont reçus dans des flasques d'extrémité 20, 21 de la carcasse. La carcasse 12 comporte, autour de l'arbre 16, un empilement de tôles magnétiques 22 formant une partie du circuit magnétique du moteur.

Ces tôles sont en forme générale de couronne et s'étendent transversalement à l'axe X-X en étant accolés les unes contre les autres suivant la longueur de cet axe.

Cet empilement de tôles est retenu par une frette tubulaire extérieure 24 enserrant radialement l'ensemble des tôles 22 en s'appuyant sur leur tranche. Cette frette est reprise à chaque extrémité sur les flasques 20, 21.

L'empilement 22 porte des bobinages 26 pour la circulation d'un courant électrique pour la création d'un champ magnétique comme connu en soi.

Au travers de l'empilement de tôles 22 sont ménagés des conduits longitudinaux 36 de circulation d'air de refroidissement.

Ces conduits s'étendent longitudinalement parallèlement à l'axe X-X du moteur. Il débouche à chaque extrémité de l'empilement de tôles à l'intérieur du moteur.

Le rotor 14 comporte de manière similaire un empilement de tôles magnétiques 40 formant un circuit magnétique. Des conducteurs de cuivre longitudinaux 42 sont disposés dans des encoches extérieures du circuit magnétique. Ils sont reliés ensemble à chaque extrémité par deux couronnes conductrices 44 pour former une cage d'écureuil comme connue en soi afin de permettre la circulation d'un courant électrique polarisant.

Les tôles magnétiques 40 de forme annulaire sont maintenues comprimées entre deux bagues de retenue d'extrémité 52.

Les bagues de retenue d'extrémité 52 et l'empilement de tôles 40 du rotor sont traversés d'une extrémité à l'autre par des conduits de refroidissement 54 s'étendant parallèlement à l'axe X-X. Ces conduits sont régulièrement angulairement répartis à la périphérie du rotor. Ils débouchent à chaque extrémité sur les faces d'extrémité du rotor depuis un orifice d'entrée 56A pour le flux d'air de refroidissement jusqu'à un orifice de sortie 56B pour le flux d'air de refroidissement ayant traversé le rotor.

Sur le flasque 20, le moteur comporte une ou plusieurs ouvertures 60 d'entrée d'air de refroidissement à l'intérieur du moteur. De même, le flasque opposé 21 comporte une sortie 62 pour l'air ayant circulé au travers du moteur.

Le moteur comporte en outre un ventilateur 70 de mise en circulation d'un flux d'air au travers du moteur et plus précisément au travers des conduits 36 et 54.

Ce ventilateur comporte une roue prolongée par une collerette d'extrémité 72, laquelle est solidaire d'une extrémité de l'arbre 16 et mobile en rotation avec lui. Cette roue 72 présente une paroi tronconique pleine qui comporte des pales 74 de mise en mouvement de l'air issu de la sortie 62. Un capotage 76 solidaire de la carcasse 12 assure un guidage de l'air issu du moteur vers l'extérieur.

En variante, le capotage 76 assure un guidage de l'air vers les ouvertures 60 d'entrée d'air, et assure ainsi une circulation de l'air en circuit fermé.

Suivant encore une autre variante, les ouvertures d'entrée d'air 60 sont supprimées et l'air circule au travers successivement des conduits 36 et 54 formant un circuit fermé. À cet effet, le capotage 76 assure un guidage de l'air de l'orifice 56B vers le conduit 36 et le flasque 20 assure un guidage de l'air du conduit 36 vers la coiffe 80 et l'orifice d'entrée 56A.

Dans le mode de réalisation représenté, le ventilateur 70 est disposé sur l'arbre du côté de la sortie 62. Il est propre à assurer depuis la sortie 62 une dépression dans le rotor et le stator permettant une circulation de l'air de l'entrée 60 vers la sortie 62.

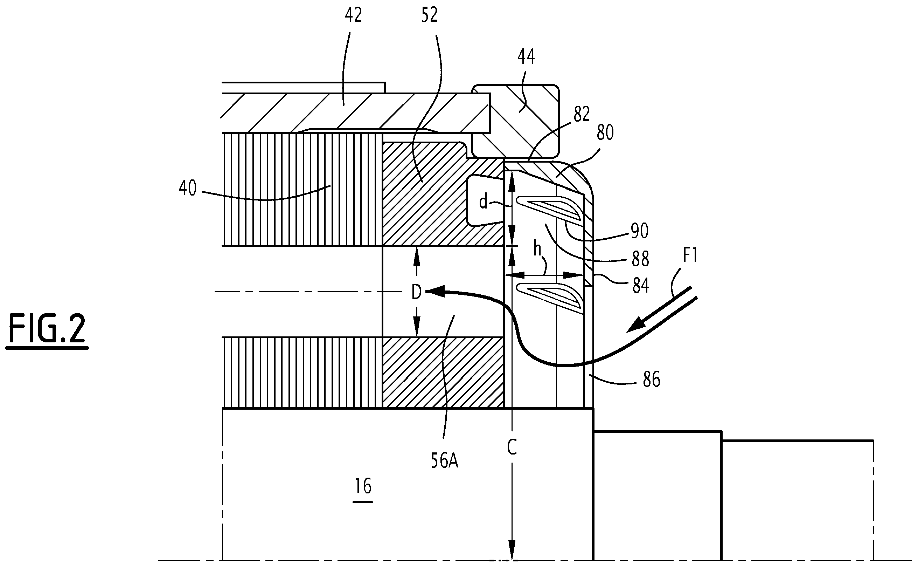

Comme illustré sur la figure 2, le rotor comporte à une extrémité une coiffe annulaire 80 disposée sur la bague de retenue d'extrémité 52 du côté des orifices d'entrée d'air 56A. Cette coiffe présente une forme de coupelle évidée axialement et s'étend à l'écart des orifices 56A.

Elle est disposée suivant l'axe X-X et est solidarisée depuis sa périphérie sur la bague de retenue d'extrémité 52 de pressage de l'empilement de tôles 40.

La coiffe annulaire 80 présente une jupe tubulaire 82 prolongée d'un côté par un fond annulaire 84. La coiffe est fixée depuis le bord libre périphérique de la jupe annulaire 80 sur la bague de retenue d'extrémité 52, le fond annulaire 84 étant à l'écart des orifices 56A. La coiffe est formée en acier ou tout autre matériau adapté.

La jupe 82 et le fond 84 forment ensemble une paroi pleine, c'est-à-dire, non perméable au gaz en dehors de l'ouverture centrale notée 86 formée axialement au centre du fond 84.

La coiffe 80 recouvre seulement partiellement les orifices 56A d'entrée d'air selon l'axe X-X. Avantageusement, elle recouvre moins de 60% de la dimension radiale maximale notée D des orifices d'entrée 56A. Ainsi, les ouvertures 56A sont disposées pour au moins 40% de l'étendue de leur dimension radiale maximale D en regard de l'ouverture centrale circulaire 86.

Une dimension radiale de l'orifice désigne la dimension, mesurée radialement suivant un rayon issu de l'axe X-X, entre les deux bords successifs de l'orifice. La dimension radiale maximale est le maximum des dimensions pour tous les rayons traversant l'orifice.

La coiffe annulaire 80, et plus précisément la jupe périphérique 82 de celle-ci est séparée du cercle de rayon minimal C centré sur l'axe X-X et ceinturant l'ensemble des orifices d'entrée 56A, d'une distance d mesurée radialement supérieure à 0,5 fois la dimension radiale maximale des orifices d'entrée 56A. Ainsi, la jupe 82 est espacée des orifices 56A, la coiffe délimitant alors, autour des orifices 56A, une chambre annulaire 88 ouverte seulement vers l'axe X-X.

La hauteur h de la coiffe annulaire 80, mesurée suivant l'axe X-X est comprise entre 0,5 fois et 2 fois la dimension radiale maximale D des orifices d'entrée 56A. Dans le mode réalisation représenté, cette hauteur h est sensiblement égale à la dimension D.

Des profils d'entrainement 90 sont ménagés sur la surface interne de la coiffe 80. Ces profils d'entrainement 90 sont propres à assurer une mise en rotation du gaz contenu dans la chambre 88 et du flux gazeux pénétrant axialement dans la coiffe. Avantageusement, ces profils d'entrainement sont formés de saillies ménagées sur la surface interne de la coiffe et ces saillies étant régulièrement réparties suivant la périphérie de la coiffe.

La coiffe 80 est dépourvue de tout profil d'entraînement en regard des orifices d'entrée 56A.

Ces saillies 90 sont ménagées seulement à l'extérieur du cercle de rayon minimal C centré sur l'axe X-X et ceinturant l'ensemble des orifices d'entrée 56A.

Avantageusement, les profils d'entrainement formés ici par des saillies sont ménagés seulement dans la moitié extérieure de la chambre 88, c'est-à-dire à une distance inférieure à d/2 de la jupe 82.

De préférence, les saillies 90 sont formées sur la jupe périphérique 82 et seulement partiellement sur le fond 84 de la coiffe.

Suivant une variante de réalisation, les profils d'entrainement sont formés par des profils en saillies et en creux irréguliers assurant une rugosité sur toute la surface intérieure de la coiffe 80.

Avec un tel agencement, l'air aspiré sous l'action du ventilateur 70 assurant une dépression, arrive par l'entrée 60 et pénètre dans la coiffe 80 au travers de l'ouverture 86 suivant le sens de la flèche F1.

La coiffe 80 étant entrainée en rotation avec le rotor, celle-ci assure une mise en mouvement de l'air maintenu sous la coiffe 80 et notamment dans la chambre 88. L'air nouvellement apporté, suivant le sens de la flèche F1 se trouve progressivement mis en rotation lorsqu'elle traverse la coiffe 80 par friction avec l'air maintenu sous la coiffe dans la chambre 88, de sorte que l'air arrivant en regard des orifices d'entrée 56A est animé d'un mouvement de rotation autour de l'axe X-X, évitant le cisaillement connu dans l'état de la technique.

L'usage de profils d'entrainement très espacés radialement des orifices d'entrée 56A permet d'éviter des phénomènes de turbulence au niveau de ces entrées 56A, lesquelles peuvent nuire à l'écoulement du fluide et favoriser la création de bruits de fonctionnement.

## Revendications

1. Moteur électrique (10) comportant :
- un stator (12) et un rotor (14) monté rotatif dans le stator (12) autour d'un axe (X-X), le rotor (14) comportant un circuit magnétique (40, 52) traversé par des conduits longitudinaux de ventilation (54) s'étendant parallèlement à l'axe (X-X), et
- un ventilateur (70) de mise en mouvement d'un gaz de refroidissement au travers des conduits longitudinaux (54) depuis un orifice d'entré (56A) de chaque conduit vers un orifice de sortie (56B) de chaque conduit (54),
dans lequel, le rotor (14) comporte, à son extrémité où débouchent les orifices d'entrée (56A), une coiffe annulaire (80) à paroi pleine, centrée sur l'axe (X-X) et recouvrant au moins partiellement les orifices d'entrée (56A), dont la surface interne tournée vers les orifices d'entrée (56A) comporte des profils (90) d'entrainement en rotation du flux gazeux pénétrant axialement dans la coiffe (80)
**caractérisé en ce que** les profils d'entrainement (90) sont ménagés seulement à l'extérieur d'un cercle de rayon minimal (C) centré sur l'axe (X-X) et ceinturant l'ensemble des orifices d'entrée (56A).

2. Moteur électrique selon la revendication 1, dans lequel les profils d'entraînement sont des saillies (90) ménagées sur la surface interne de la coiffe (80).

3. Moteur électrique selon la revendication 1 ou 2, dans lequel les profils d'entrainement (90) sont ménagés seulement dans la moitié extérieure de l'anneau délimité entre la coiffe (80) et le cercle de rayon minimal (C) centré sur l'axe (X-X) et ceinturant l'ensemble des orifices d'entrées (56A).

4. Moteur électrique selon l'une quelconque des revendications précédentes, dans lequel la coiffe annulaire (80) comporte une jupe (82) centrée sur l'axe (X-X) prolongée par un fond annulaire (84) s'étendant sensiblement transversalement à l'axe (X-X).

5. Moteur électrique selon l'une quelconque des revendications précédentes, dans lequel la coiffe annulaire (80) recouvre seulement partiellement les orifices d'entrée (56A) selon l'axe (X-X).

6. Moteur électrique selon la revendication 5, dans lequel la coiffe annulaire (80) s'étend sur moins de 60% de la dimension radiale maximale (D) des orifices d'entrée (56A).

7. Moteur électrique selon l'une quelconque des revendications précédentes, dans lequel la hauteur (h) de la coiffe annulaire (80) mesurée suivant l'axe (X-X) est comprise entre 0,5 et 2 fois la dimension radiale maximale (D) des orifices d'entrée (56A).

8. Moteur électrique selon l'une quelconque des revendications précédentes, dans lequel la périphérie de la coiffe annulaire (80) est séparée radialement du cercle de rayon minimal (C) centré sur l'axe (X-X) et ceinturant l'ensemble des orifices d'entrées (56A) d'une distance supérieure à 0,5 fois la dimension radiale maximale (D) des orifices d'entrée (56A).

9. Moteur électrique selon l'une quelconque des revendications précédentes, dans lequel le ventilateur (70) est disposée en aval des conduits de ventilation (54) et est propre à assurer une aspiration du gaz de refroidissement depuis l'orifice de sortie (56B).

## Patentansprüche

1. Elektromotor (10), umfassend:
- einen Stator (12) und einen Rotor (14), der im Stator (12) um eine Achse (X-X) drehbar gelagert ist, wobei der Rotor (14) einen Magnetkreis (40, 52) aufweist, der von Längsbelüftungskanälen (54) durchzogen ist, die sich parallel zur Achse (X-X) erstrecken, und
- einen Ventilator (70) zum Bewegen eines Kühlgases durch die Längskanäle (54) von einer Einlassöffnung (56A) jedes Kanals zu einer Auslassöffnung (56B) jedes Kanals (54),
wobei der Rotor (14) an seinem Ende, an dem die Einlassöffnungen (56A) münden, eine ringförmige Abdeckung (80) mit massiver Wandung aufweist, die auf der Achse (X-X) zentriert ist und die Einlassöffnungen (56A) wenigstens teilweise abdeckt, wobei die den Einlassöffnungen (56A) zugewandte Innenfläche Profile (90) zum Antrieb des axial in die Abdeckung eintretenden Gasstroms zur Drehung (80) aufweist, **dadurch gekennzeichnet, dass** die Antriebsprofile (90) nur außerhalb eines Kreises mit minimalem Radius (C) angeordnet sind, der auf der Achse (X-X) zentriert ist und alle Einlassöffnungen (56A) umgibt.

2. Elektromotor nach Anspruch 1, wobei die Antriebsprofile Vorsprünge (90) sind, die an der Innenfläche der Abdeckung (80) angeordnet sind.

3. Elektromotor nach Anspruch 1 oder 2, wobei die Antriebsprofile (90) nur in der äußeren Hälfte des Rings angeordnet sind, der zwischen der Abdeckung (80) und dem Kreis mit minimalem Radius (C) begrenzt ist, der auf der Achse (X-X) zentriert ist und die Gesamtheit der Einlassöffnungen (56A) umgibt.

4. Elektromotor nach einem der vorhergehenden Ansprüche, wobei die ringförmige Abdeckung (80) eine auf der Achse (X-X) zentrierte Schürze (82) aufweist, die durch einen ringförmigen Boden (84) verlängert ist, der sich im Wesentlichen quer zur Achse (X-X) erstreckt.

5. Elektromotor nach einem der vorhergehenden Ansprüche, wobei die ringförmige Abdeckung (80) die Einlassöffnungen (56A) entlang der Achse (X-X) nur teilweise abdeckt.

6. Elektromotor nach Anspruch 5, wobei sich die ringförmige Abdeckung (80) über weniger als 60 % der maximalen radialen Abmessung (D) der Einlassöffnungen (56A) erstreckt.

7. Elektromotor nach einem der vorhergehenden Ansprüche, wobei die Höhe (h) der ringförmigen Abdeckung (80), gemessen entlang der Achse (X-X), zwischen dem 0,5-und 2-fachen der maximalen radialen Abmessung (D) der Einlassöffnungen (56A) liegt.

8. Elektromotor nach einem der vorhergehenden Ansprüche, wobei die Umfangslänge der ringförmigen Abdeckung (80) radial vom Kreis mit minimalem Radius (C) getrennt ist, der auf der Achse (X-X) zentriert ist und die Gesamtheit der Einlassöffnungen (56A) mit einem Abstand umgibt, der größer ist als das 0,5-fache der maximalen radialen Abmessung (D) der Einlassöffnungen (56A).

9. Elektromotor nach einem der vorhergehenden Ansprüche, wobei der Ventilator (70) stromabwärts der Lüftungskanäle (54) angeordnet ist und dazu geeignet ist, das Kühlgas aus der Auslassöffnung (56B) anzusaugen.

## Claims

1. An electric motor (10) including:
- a stator (12) and a rotor (14) rotatably mounted in the stator (12) about an axis (X-X), the rotor (14) including a magnetic circuit (40, 52) through which longitudinal ventilation ducts (54) extending in parallel to the axis (X-X) pass, and
- a ventilator (70) for moving a cooling gas through the longitudinal ducts (54) from an inlet port (56A) of each duct to an outlet port (56B) of each duct (54),
wherein the rotor (14) includes, at its end where the inlet ports (56A) emerge, a solid-walled annular cap (80), centred on the axis (X-X) and at least partially covering the inlet ports (56A), the inner surface of which, pointing to the inlet ports (56A), includes profiles (90) for rotatably driving the gas flux axially entering the cap (80) **characterised in that** the drive profiles (90) are provided only outside a minimum radius circle (C) centred on the axis (X-X) and encircling all of the inlet ports (56A).

2. The electric motor according to claim 1, wherein the drive profiles are projections (90) provided on the inner surface of the cap (80).

3. The electric motor according to claim 1 or 2, wherein the drive profiles (90) are formed only in the outer half of the ring defined between the cap (80) and the minimum radius circle (C) centred on the axis (X-X) and encircling all of the inlet ports (56A).

4. The electric motor according to any one of the preceding claims, wherein the annular cap (80) includes a skirt (82) centred on the axis (X-X) and extending to an annular bottom (84) extending substantially transversely to the axis (X-X).

5. The electric motor according to any one of the preceding claims, wherein the annular cap (80) only partially covers the inlet ports (56A) along the axis (X-X).

6. The electric motor according to claim 5, wherein the annular cap (80) extends over less than 60% of the maximum radial dimension (D) of the inlet ports (56A).

7. The electric motor according to any one of the preceding claims, wherein the height (h) of the annular cap (80) measured along the axis (X-X) is between 0.5 and 2 times the maximum radial dimension (D) of the inlet ports (56A).

8. The electric motor according to any one of the preceding claims, wherein the periphery of the annular cap (80) is radially separated from the minimum radius circle (C) centred on the axis (X-X) and encircling all of the inlet ports (56A) by a distance greater than 0.5 times the maximum radial dimension (D) of the inlet ports (56A).

9. The electric motor according to any one of the preceding claims, wherein the ventilator (70) is located downstream of the ventilation ducts (54) and is able to suck cooling gas from the outlet port (56B).
